# EUROPÄISCHE PATENTANMELDUNG

(11) **EP 2 580 968 A1**
(43) Veröffentlichungstag der Anmeldung: **17.04.2013**
(21) Anmeldenummer: 11185146.5
(22) Anmeldetag: 14.10.2011
(51) Int. Cl.: A23L 2/44, A23L 3/34, B65D 81/20, B65D 81/24, C07C 51/54

(54) **Verpackung von Konservierungsmitteln, enthaltend Carbonsäureanhydride**

(71) Anmelder: LANXESS Deutschland GmbH, 51369 Leverkusen (DE)
(72) Erfinder: Vogl, Erasmus, 91126 Schwabach (DE); Taupp, Marcus, 41539 Leverkusen (DE); Bursa, Janine, 42103 Wuppertal (DE)

(57) **Zusammenfassung**

Die Erfindung betrifft verpackte Carbonsäureanhydride und ein Verfahren zur Herstellung der verpackten Carbonsäureanhydride sowie die Verwendung einer Verpackung aus einer Verbundfolie, die mindestens eine Aluminiumschicht enthält zum Transport und Lagerung von Carbonsäureanhydriden.

## Beschreibung

Die Erfindung betrifft verpackte Carbonsäureanhydride und ein Verfahren zur Herstellung der verpackten Carbonsäureanhydride sowie die Verwendung einer Verpackung aus einer Verbundfolie, die mindestens eine Aluminiumschicht enthält zum Transport und Lagerung von Carbonsäureanhydriden.

Carbonsäureanhydride, insbesondere Sorbinsäureanhydrid und Benzoesäureanhydrid werden zur Konservierung von technischen Materialien, Lebensmittel und Getränken eingesetzt.

Sorbinsäureanhydride und Benzoesäureanhydrid müssen in möglichst reiner Form den zu konservierenden Materialien und Getränken zugesetzt werden, um eine schnelle und effiziente Sterilisierung und Konservierung sicherstellen zu können. In den bisherigen Verpackungen neigen die Carbonsäureanhydride, insbesondere Sorbinsäureanhydrid und Benzoesäureanhydrid, zur Zersetzung und sind daher nur bedingt transport- und lagerfähig. Sobinsäureanhydrid neigt insbesondere zur Oxidation und zur Polymerisation. Benzoesäureanhydrid wird bisher im Allgemeinen in Glasgebinden transportiert und gelagert.

Aus dem Stand der Technik sind eine Vielzahl von üblichen Verpackungen bekannt, wie beispielsweise PET container, PP container, PE container, HDPE (high density polyethylen), LDPE (low density polyethylene) oder Kombinationen daraus sowie Glas-Gebinde die prinzipiell zum Transport von Chemikalien geeignet erscheinen.

Spezielle Verpackungen, insbesondere für den Transport von oxidationsempfindlichen Polymeren sind beispielsweise aus der DE 20 2009 000 692 U bekannt. Hierbei werden Verbundfolien, die eine Barriereschicht auf Basis von Polyvinylalkoholen enthalten, eingesetzt.

Aus der U.S 6,331,333 B sind beispielsweise Sauerstoff-undurchlässige Verpackungen bekannt, in denen aber im Wesentlichen die Oxidation des Füllgutes, des Polyvinylpyrrolidons, durch den Zusatz eines Sauerstofffängers verhindert wird.

Aus z.B. JP 09 216 653 A und JP 09 226 070 A sind Verbundfolien mit Polyvinylalkoholschichten bekannt, die die Basis für Sauerstoff-undurchlässige Verpackungen von Lebensmitteln, Kosmetika und Chemikalien darstellen.

Verpackungen zur Lagerung und zum Transport von Infusionslösungen aus Polyester oder Polyamid mit Sauerstoffbarnereschichten, die z.B. aus Aluminiumoxiden bestehen sind aus der DE 60 2005 00 6339 T bekannt. Verbundfolien zu Verpackungszwecken, die ebenfalls Metallschichten enthalten sind aus der DE 102007024715 A bekannt.

Aus der DE 10 2006 060 083 B sind Verbundfolien aus Polyethylen, Polyamiden, Polypropylen Polyvinylalkoholen und u.a. einer Aluminiumschicht zur Verpackung von Lebensmitteln bekannt.

Weiterhin sind aus der WO 2006/015765 schlauchförmige, mehrschichtige, thermoplastische Verbundfolien für die Verpackung von Lebensmitteln bekannt.

Die aus dem Stand der Technik bekannten Verpackungen weisen weiterhin den Nachteil auf, dass Carbonsäureanhydride, insbesondere Sorbinsäureanhydrid und Benzoesäureanhydrid nicht zersetzungsfrei gelagert und transportiert werden können.

Die Aufgabe der vorliegenden Erfindung bestand also darin, ein Verpackungsmaterial bereitzustellen, mit dem die Nachteile des Standes der Technik überwunden werden können.

Überraschend wurde nun gefunden, dass Carbonsäureanhydride in Verbundfolien, die mindestens eine Schicht aus Aluminium enthalten im Wesentlichen zersetzungsfrei gelagert und transportiert werden können.

Gegenstand der Erfindung ist daher verpacktes Füllgut enthaltend mindestens eine Verbindung der Formel (I) 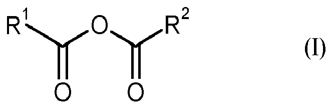 worin
R¹ und R² unabhängig voneinander für geradkettiges oder verzweigtes C₁-C₈-Alkyl, C₃-C₈-Cycloalkyl, ein- oder mehrfach ungesättigtes C₂-C₈-Alkenyl, C₅-C₈-Cycloalkenyl, C₅-C₈-Alkinyl, Phenyl, Benzyl oder Phenethyl stehen, welches jeweils gegebenenfalls ein- bis mehrfach, gleich oder verschieden substituiert ist durch Methyl, Hydroxyl, Carboxyl, Acyl, Alkoxy, Acyloxy oder Oxo, bei dem die Verpackung mindestens eine Verbundfolie umfasst, die mindestens eine Aluminiumschicht enthält.

Bevorzugt stehen R¹ und R² unabhängig voneinander für geradkettigtes oder verzweigtes ein- oder mehrfach ungesättigtes C₂-C₈-Alkenyl, C₅-C₈-Cycloalkenyl, Phenyl oder Benzyl stehen, welches jeweils gegebenenfalls ein- bis mehrfach gleich oder verschieden substituiert ist, durch Methyl, Hydroxyl, Carboxyl, Acyl, Alkoxy oder Acyloxy.

Besonders bevorzugt stehen R¹ und R² unabhängig voneinander für Ethylen, Propylen, 2-Propylen, 3-Butenyl, 1-Butenyl, Pent-1,3-dienyl, Pent-2,4-dienyl oder Phenyl.

Ganz besonders bevorzugt stellen die Verbindungen der Formel (I) Benzoesäureanhydrid und Sorbinsäureanhydrid. Noch weiter bevorzugt stellen die Verbindungen der Formel (I) Sorbinsäureanhydrid dar. Mit dem Begriff Sorbinsäureanhydrid werden ebenfalls sämtliche Stereoisomere des Sorbinsäureanhydrids umfasst. Noch weiter bevorzugt stellen die Verbindungen der Formel (I) all-E-Sorbinsäureanhydrid dar.

Das Füllgut stellt im Allgemeinen Verbindungen der Formel (I) oder Gemische der Verbindungen der Formel (I) dar. Das Füllgut kann ebenfalls weitere Zusätze wie z.B. anorganische oder organische Alkali- oder Erdalkalimetallsalze, Trocknungsmittel, wie z.B. Calciumchlorid oder Silicagel oder Sauerstofffänger, wie z.B. Sulfite enthalten. Bevorzugt enthält das Füllgut keine weiteren Zusätze. Der Begriff Füllgut umfasst die zu transportierenden oder/und zu lagernden Verbindungen. Der Begriff Füllgut umfasst nicht Schutzgase oder Luft, die gegebenenfalls zusätzlich in der Verpackung enthalten sind. Bevorzugt sind die Verbindungen der Formel (I) oder die Gemische der Verbindungen der Formel (I) in einer Menge von 90 bis 100 % bezogen auf die Gesamtmenge des Füllgutes in der Verpackung enthalten. Besonders bevorzugt sind die Verbindungen der Formel (I) oder die Gemische der Verbindungen der Formel (I) in einer Menge von 95 bis 100 %, ganz besonders bevorzugt in einer Menge von 98 bis 100 % bezogen auf die Gesamtmenge des Füllgutes, in der Verpackung enthalten. Noch weiter bevorzugt liegen die Verbindungen der Formel (I) in einer Menge von 99 bis 100 % bezogen auf die Gesamtmenge des Füllgutes, in der Verpackung vor.

Der Rahmen der Erfindung erfasst alle oben stehenden und im Folgenden aufgeführten allgemeinen oder in Vorzugsbereichen genannten Parameter und Erläuterungen untereinander, also auch zwischen den jeweiligen Bereichen und Vorzugsbereichen in beliebiger Kombination.

Die Verbundfolien stellen mehrschichtige Folien dar, die insbesondere mindestens eine Schicht aus Aluminium beinhalten.

Die eingesetzten Materialien zur Bildung der Folien können beispielsweise Polyester, Polyethylen, Polyamide, Polyvinylchloride, Polyvinylalkohole, Zellglas oder Polyolefine darstellen. Als Polyester eignen sich beispielsweise Polycarbonate oder Polyethylenterphthalate. Als Polyolefine können z.B. Polypropylene oder Polyethylene wie insbesondere high-density (HDPE) oder low-density (LDPE) Polyethylen-Produkte darstellen. Bevorzugt besteht mindestens eine Folie der Verbundfolie aus Polyethylen. Besonders bevorzugt besteht mindestens eine Folie der Verbundfolie aus Polyethylen. Ganz besonders bevorzugt bestehen mindestens zwei Folien der Verbundfolie aus Polyethylen.

Die Folienschichten können weiterhin auch aus Mischungen aus den Polymeren und weiteren Copolymeren, die z.B. durch Umsetzung von Ethen mit Comonomeren wie z.B. Alkylenen, wie z.B. Propen, Buten, Hexen oder Octen hergestellt wurden, bestehen.

Die Schichten der Folien können z.B. durch Laminierung oder Klebekaschierung miteinander verbunden werden. Die Klebeschicht kann hierbei aus natürlichen, halbsynthetischen oder synthetischen Klebestoff bestehen.

Als geeigneter Haftkleber kommen z.B. Pfropf- oder lineare Copolymere in Frage. Weitere geeignete Haftkleber stellen beispielsweise Säure- oder Anhydrid modifizierte Polyolefine dar. Zudem können auch Gemische aus Haftkleber verwendet werden.

Die Verbundfolien werden aus den Mono-Folien durch lösungsmittelhaltige oder lösungsmittelfreie Klebekaschierung oder Extrusionskaschierung und Extrusionsbeschichtung hergestellt. Im Allgemeinen werden die Verbundfolien zunächst flächig hergestellt und können danach zu Verpackungen in der Form von z.B. Säcken oder Schläuchen verschweißt, laminiert oder verklebt werden.

Die Verbundfolien und die daraus hergestellten Verpackungen bestehen in der Regel aus 3 bis 7 Schichten, bevorzugt werden 3 bis 4 Schichten verwendet.

Die verwendeten Verbundfolien können einen symmetrischen oder unsymmetrischen Aufbau aufweisen. Dies bedeutet, dass z.B. die Aluminiumschicht auf der Innenseite angebracht werden kann und dadurch z.B. in direktem Kontakt mit den Verbindungen der Formel (I) stehen. Ebenso ist es allerdings auch möglich, dass sich die Aluminiumschicht auf der Außenseite der Verbundfolie befindet und danach ein oder mehrere Schichten folgen und somit die Folie in direktem Kontakt mit den Verbindungen der Formel (I) steht. Bevorzugt ist es aber so, dass die Innenseite eine Folie aufweist. Bevorzugt weist die Verbundfolie zunächst eine Folie aus einem Polymer, dann eine Aluminiumschicht und dann eine weitere Folie aus einem Polymeren auf. Bevorzugt bestehen diese Polymere aus Polyethylen. Danach kann eine weitere Schicht aus einem z.B. bedruckbarem Trägermaterial folgen. Bevorzugt dient die äußere Folie als Trägermaterial, die ebenfalls bedruckbar ist. Bevorzugt besteht die äußere Folie aus orientierten Polypropylen (OPP). Die Schichten der Verbundfolie werden in der Regel mit Hilfe eines Haftklebers verbunden. Im bevorzugten Fall werden die Schichten der Verbundfolie mit einem Haftkleber verbunden. Bevorzugt ist die Struktur der Verbundfolie orientiertes Polypropylen (OPP)/Polyethylen (PE)/Aluminiumfolie/Polyethylen (PE).

Die Schichtdicke der einzelnen Folien liegt in der Regel im Bereich zwischen 50 und 2000 µm, vorzugsweise zwischen 5 und 50 µm.

Die Aluminiumschicht weist in der Regel eine Schichtdicke von 10 bis 50 µm, vorzugsweise von 10 bis 40 µm, besonders bevorzugt von 10 bis 20 µm auf.

Die Verbundfolien lassen sich zu verschiedenen Formen der Verpackung wie beispielweise Pappkarton, Pappfässer oder Kunststofffässer weiter verarbeiten. Die Kunstofffäser können beispielsweise mit der Verbundfolie ausgekleidet werden. Die Verpackungen können selbstragende flexible oder nicht flexible selbsttragende Verpackungen darstellen. Bevorzugt ist die Verpackung schlauch- oder sackförmig. Bevorzugt ist die Verpackung flexibel und nicht selbstragend. Bevorzugt besteht die Verpackung aus einer schlauch- oder sackförmig Verbundfolie.

Die Gasdurchlässigkeit der Verpackungen und der Verbundfolien wird gemäß der Bestimmungsmethode ASTM D3985 / DIN 5338013 ermittelt. Die Verpackungen und die Verbundfolien weisen eine Sauerstoffpermeabilität von weniger als 5,0 cm³/m² * d * bar, bevorzugt von weniger als 1,0 cm³/m² * d * bar und besonders bevorzugt von 0,4 cm³/m² * d * bar bis 0,7 cm³/m² * d * bar bei 23°C und 0 % relativer Luftfeuchtigkeit auf.

Die Wasserdampfpermeabilität der Verpackungen und der Verbundfolien ist nach ASTM F1249 geringer als 5,0 g/m² * d, bevorzugt geringer als 1,0 g/m² * d und besonders bevorzugt zwischen 0,3 g/m² x d und 0,7 g/m² * d bei einer Temperatur von 40 °C und 90 % relativer Luftfeuchtigkeit.

Die Herstellung der Verbundfolien und der Verpackungen erfolgt nach allgemeinen dem Fachmann bekannten Herstellungsverfahren wie z.B. Extrusionkaschierung oder Extrusionsbeschichtung.

Von der Erfindung ist ebenfalls ein Verfahren zur Herstellung eines verpackten Füllgutes enthaltend mindestens eine Verbindung der Formel (I) 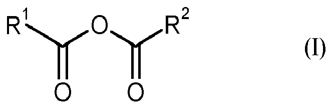 worin
R¹ und R² unabhängig voneinander für geradkettiges oder verzweigtes C₁-C₈-Alkyl, C₃-C₈-Cycloalkyl, ein- oder mehrfach ungesättigtes C₂-C₈-Alkenyl, C₅-C₈-Cycloalkenyl, C₂-C₈-Alkinyl, Phenyl, Benzyl oder Phenethyl stehen, welches jeweils gegebenenfalls ein- bis mehrfach, gleich oder verschieden substituiert ist durch Methyl, Hydroxyl, Carboxyl, Acyl, Alkoxy, Acyloxy oder Oxo, bei dem das Füllgut gegebenenfalls unter Schutzgas in eine Verpackung mit mindestens einer Verbundfolie, die mindestens eine Aluminiumschicht enthält, eingefüllt wird.

Die Verpackung weist einen Hohlraum auf, der durch unterschiedliche Öffnungen, bevorzugt durch eine Öffnung befüllt werden kann. Das Füllgut wird in der Regel durch einen Füllstutzen, den die Verpackungen aufweisen, in den Innenraum der Verpackungen eingefüllt.

Im Allgemeinen erfolgt dieser Prozess des Abfüllens unter Schutzgas. Bevorzugt wird die Befüllung der Verpackung unter Schutzgas durchgeführt. Als Schutzgase kommen beispielsweise Argon, Helium oder Stickstoff in Frage. Bevorzugt erfolgt die Abfüllung in Gegenwart eines Schutzgases, bevorzugt in Gegenwart von Stickstoff.

Die Innertisierung der Verpackungen kann dadurch erfolgen, dass beispielsweise das Schutzgas in die leere Verpackung eingefüllt wird, bevor das Füllgut hinzugegeben wird.

Es ist allerdings ebenfalls möglich, dass das Füllgut mit dem Schutzgas in die noch luftgefüllte Verpackung eingefüllt wird. Bevorzugt erfolgt eine Innertisierung der Verpackung durch das Schutzgas, bevor das Füllgut eingefüllt wird. Bevorzugt erfolgt die Einfüllung des Füllgutes unter Schutzgasatmosphäre. Weitere Innertisierungsformen sind denkbar und dem Fachmann bekannt.

Die Verpackungen können durch unterschiedliche Formen wie z.B. durch Binden, Klemmen, Verschrauben, Verkleben oder Verschweißen verschlossen werden.

Der Verschluss der Öffnung der Verpackung kann beispielsweise durch das Aufbringen weiterer Folien, die dann durch lokale Hitzeeinwirkung miteinander verschweißt werden, erfolgen.

Beispielsweise kann allerdings der Verschluss der Verpackung auch dadurch erfolgen, dass die Verbundfolie einfach durch Erhitzen verschweißt wird.

In diesem Fall dienen die schon aufgebrachten Polymere als Basismaterialien, die durch Hitze verschweißt werden und dadurch die Folie/Verpackung verschließen.

Weitere Verschlussmöglichkeiten sind dem Fachmann bekannt.

Bevorzugt erfolgt das Verschließen der Verpackungen durch Laminierung der Öffnungen der Verpackung.

Weiterhin kann der Verschluss unter kontinuierlichem Einströmen von Schutzgas erfolgen. Bevorzugt erfolgt der Verschluss unter kontinuierlichen Einströmen von Schutzgas. Insbesondere bei selbstragenden Verpackungen kann die Öffnung z.B. auch durch Schraubklemmen oder durch schraubbare Deckeln verschlossen werden. Bevorzugt werden selbsttragende Verpackungen durch Verschrauben und Verkleben oder Verschweißen verschlossen.

Die Verpackungen können zudem nochmals umverpackt werden.

Umverpackt beudeutet, dass die Verpackungen allgemein in eine weitere Verpackung überführt werden, die ebenfalls aus Verbundfolien bestehen können, die aber auch aus anderen Materialien, Metallen, Karton oder auch Polymeren oder Kombinationen davon bestehen können.

Die Lagerung und der Transport des Füllgutes kann im Allgemeinen bei Temperaturen und Drücken erfolgen, die dem Fachmann als geeignet erscheinen. Bevorzugt erfolgt die Lagerung und der Transport bei Temperaturen zwischen -78 °C und +40 °C, besonders bevorzugt bei Temperaturen zwischen -38 °C und +38 °C und ganz besonders bevorzugt bei -25 °C und + 25 °C. Bevorzugt erfolgt die Lagerung und der Transport des Füllgutes bei Atmosphärendruck, das heißt das kein besonderer Druck vorgegeben wird. Die Lagerung und der Transport des Füllgutes kann in Anwesenheit oder Abwesenheit eines Schutzgases erfolgen. Bevorzugt erfolgt die Lagerung und der Transport unter Anwesenheit eines Schutzgases. Bevorzugt erfolgt der Transport und die Lagerung des Füllgutes in Gegenwart eines Schutzgases, insbesondere in Gegenwart von Stickstoff.

Unter Verwendung der erfindungsgemäßen Verpackungen lassen sich Carbonsäureanhydride insbesondere Sorbinsäureanhydrid und Benzoesäureanhydrid ohne wesentliche Zersetzungen transportieren und lagern. In den bisher üblichen Verpackungen, wie z.B. Kunststoff oder Glasgebinde, die zum Transport verwendet werden, ist im Gegensatz hierzu ein erheblicher Abbau an dem aktiven Wirkstoff in kurzer Zeit festzustellen. Daher ist von der Erfindung ebenfalls die Verwendung der Verpackungen und der Verbundfolien zum Transport, zur Lagerung und zur Verpackung eines Füllgutes enthaltend mindestens eine Verbindung der Formel (I), umfasst.

Durch die spezielle Verpackung können die Verbindungen der Formel (I) in einer Reinheit von mehr als 90 % über einen Zeitraum von einem bis drei Jahren gelagert werden. Besonders bevorzugt können die Verbindungen der Formel (I) in einer Reinheit von mehr als 98 % über einen Zeitraum von 1 bis 2 Jahren gelagert werden.

Durch die erfindungsgemäße Verpackung lassen sich erstmals Carbonsäureanhydride, insbesondere Sorbinsäureanhydrid und Benzoesäureanhydrid, bei Raumtemperatur ohne signifikante Zersetzung lagern und transportieren und stehen damit erstmals als effiziente Konservierungsmittel für Nahrungsmittel und Getränke zur Verfügung.

### Beispiele

500 mg Sorbinsäureanhydrid wurde in den in Tabelle 1 aufgeführten Kleingebinden eingewogen. In Beispiel (1), (3) und (4) wurde das Kleingebinde nicht komplett verschlossen so dass ein Luftaustausch stattfinden konnte. Dagegen wurden in den Beispielen (2), (6) und (7) das Kleingebinde dicht verschlossen, nachdem die Substanz Sorbinsäureanhydrid mit Stickstoff überschichtet worden war. In Beispiel (5) wurde das Kleingebinde ebenfalls dicht verschlossen, so dass kein Luftaustausch möglich war. Die Proben wurden bei 20 °C ± 2 °C Temperatur im Labor gelagert.

**Tabelle 1:**

| | | **Lager-Zeit [d]** | **0** | **7** | **14** | **28** | **55** | **60** | **70** | **84** |
|---|---|---|---|---|---|---|---|---|---|---|
| **Beispiel** | **Kleingebinde** | **Lagerbedingungen** | **Gehalt an Sorbinsäureanhydrid [%]** | | | | | | | |
| 1 | Braunglas | Luftaustausch möglich | 100 | 98,5 | 41,9 | 40,0 | - | 35,4 | 34,6 | 34,4 |
| 2 | Braunglas | geschlossen, Stickstoff überlagert | 100 | 98,5 | - | - | 95,9 | - | 94,6 | - |
| 3 | Weißglas | Luftaustausch möglich, hell | 100 | 98,1 | 45,2 | 42,1 | 35,7 | 35,2 | 34,8 | 34,1 |
| 4 | PE-Gebinde | Luftaustausch möglich, hell | 100 | 98,5 | 42,7 | 40,0 | - | 33,8 | - | - |
| 5 | Alumimumbeutel | Luft, verschlossen | 100 | 99,3 | 98,5 | 97,9 | 95,6 | 95,4 | 94,9 | 93,5 |
| 6 | Alumimumbeutel | Stickstoff, verschlossen | 100 | 100 | 100 | 100 | 99,9 | 99,7 | 99,6 | 99,5 |
| 7 | Alumimumbeutel | Argon, verschlossen | 100 | 100 | 100 | 100 | 99,8 | 99,7 | 99,6 | 99,5 |

Bei den Glasgebinden (Weiss- und Braunglas) handelt es sich um 100 mL-Vierkantflaschen mit Gewinde und Schraubverschluss. Bei den PE-Gebinden handelt es sich um 100 mL-Vierkantflaschen mit Gewinde und Schraubverschluss. Die verwendeten Gebinde wurden von der Fa. VWR Internationaler Chemikalien- und Laborbedarf bezogen.

Bei dem Aluminiumbeutel handelt es sich um ein Kleingebinde des Herstellers Cadillac Products Packaging Company mit der Struktur OPP (oriented polypropylen)/Polyethylen/Alumiumfolie/Polyethylen aus der CADPAK P Series (QPL MIL-PRF-131K).

### Physikalische Eigenschaften des Aluminiumbeutels

**Tabelle 2:**

| **Eigenschaften** | **Werte** | **Einheiten** | **Testverfahren** |
|---|---|---|---|
| Dicke | 0,114 | mm | ASTM D2103 |
| Materialausbeute | 85,90 | cm²/kg | Calculated |
| Durchstoßfestigkeit | 9,0719 | kg | MIL STD 3010 |
| Scherfestigkeit | 5,00 | kg/cm | ASTM D882 |
| Bruchfestigkeit | 34,019 | kg | Mil-Prf-131K |
| Gasdurchlässigkeit | 0,0077 | ml/m²/Tag @0 % RH, 23°C | ASTM D3985 |
| Wasserdampfpermeabilität | 0,0077 | g/m²/Tag @90 % RH, 40°C | ASTM F 12490 |
| Verschlussstärke | 3,214 | kg/cm | ASTM F88 |
| Verschlussbedingungen | 204,44 °C, 2,757 bar, 1,5 sec | | |

## Patentansprüche

1. Verpacktes Füllgut enthaltend mindestens eine Verbindung der Formel (I) 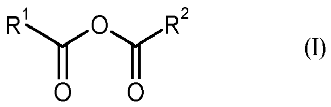 worin
R¹ und R² unabhängig voneinander für geradkettiges oder verzweigtes C₁-C₈-Alkyl, C₃-C₈-Cycloalkyl, ein- oder mehrfach ungesättigtes C₂-C₈-Alkenyl, C₅-C₈-Cycloalkenyl, C₂-C₈-Alkinyl, Phenyl, Benzyl oder Phenethyl stehen, welches jeweils gegebenenfalls ein- bis mehrfach, gleich oder verschieden substituiert ist durch Methyl, Hydroxyl, Carboxyl, Acyl, Alkoxy, Acyloxy oder Oxo,
**dadurch gekennzeichnet, dass** die Verpackung mindestens eine Verbundfolie umfasst, die mindestens eine Aluminiumschicht enthält.

2. Verpacktes Füllgut gemäß Anspruch 1, **dadurch gekennzeichnet, dass** R¹ und R² unabhängig voneinander für Ethylen, Propylen, 2-Propylen, 3-Butenyl, 1-Butenyl, Pent-1,3-dienyl, Pent-2,4-dienyl oder Phenyl stehen.

3. Verpacktes Füllgut gemäß Anspruch 1, **dadurch gekennzeichnet, dass** die Verbindung der Formel (I) ausgewählt ist aus der Gruppe Sorbinsäureanhydrid und Benzoesäureanhydrid.

4. Verpacktes Füllgut nach einem oder mehreren der Ansprüche 1 bis 3, **dadurch gekennzeichnet, dass** die Verbundfolie mindestens eine Folienschicht aus Polyethylen und eine Aluminiumschicht enthält.

5. Verpacktes Füllgut nach einem oder mehreren der Ansprüche 1 bis 4, **dadurch gekennzeichnet, dass** die Verpackung ein Schutzgas enthält.

6. Verpacktes Füllgut nach einem oder mehreren der Ansprüche 1 bis 5, **dadurch gekennzeichnet, dass** die Verbindung der Formel (I) in einer Menge von 90 bis 100 %, vorzugsweise in einer Menge von 96 % bis 100 % bezogen auf die Gesamtmenge des Füllgutes, als Füllgut vorliegt.

7. Verpacktes Füllgut nach einem oder mehreren der Ansprüche 1 bis 6, **dadurch gekennzeichnet, dass** die Verbundfolie mindestens vier Schichten mit der Struktur orientiertes Polypropylen/Polyethylen/Aluminiumfolie/Polyethylen enthält.

8. Verfahren zur Herstellung eines verpackten Füllgutes enthaltend mindestens eine Verbindung der Formel (I) gemäß Anspruch 1 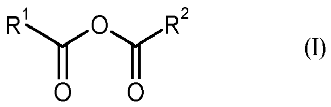 worin
R¹ und R² unabhängig voneinander für geradkettiges oder verzweigtes C₁-C₈-Alkyl, C₃-C₈-Cycloalkyl, ein- oder mehrfach ungesättigtes C₂-C₈-Alkenyl, C₅-C₈-Cycloalkenyl, C₂-C₈-Alkinyl, Phenyl, Benzyl oder Phenethyl stehen, welches jeweils gegebenenfalls ein- bis mehrfach, gleich oder verschieden substituiert ist durch Methyl, Hydroxyl, Carboxyl, Acyl, Alkoxy, Acyloxy oder Oxo, **dadurch gekennzeichnet, dass** das Füllgut gegebenenfalls unter Schutzgas in eine Verpackung mit mindestens einer Verbundfolie, die mindestens eine Aluminiumschicht enthält, eingefüllt wird.

9. Verwendung von einer Verpackung aus einer Verbundfolie, die mindestens eine Alumiumschicht enthält zur Verpackung, zum Transport und zur Lagerung eines Füllgutes enthaltend mindestens eine Verbindung der Formel (I) 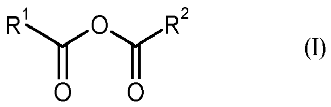 worin
R¹ und R² unabhängig voneinander für geradkettiges oder verzweigtes C₁-C₈-Alkyl, C₃-C₈-Cycloalkyl, ein- oder mehrfach ungesättigtes C₂-C₈-Alkenyl, C₅-C₈-Cycloalkenyl, C₂-C₈-Alkinyl, Phenyl, Benzyl oder Phenethyl stehen, welches jeweils gegebenenfalls ein- bis mehrfach, gleich oder verschieden substituiert ist durch Methyl, Hydroxyl, Carboxyl, Acyl, Alkoxy, Acyloxy oder Oxo.

10. Verwendung gemäß Anspruch 9, **dadurch gekennzeichnet, dass** die Verbindungen der Formel (I) in einer Reinheit von mehr als 90 %, über einen Zeitraum von einem bis drei Jahren gelagert werden können.
